Europäisches Patentamt

European Patent Office

Office européen des brevets

(19)

(11) Publication number : **0 518 430 B1**

(12) **EUROPEAN PATENT SPECIFICATION**

(45) Date of publication of patent specification :
02.11.95 Bulletin 95/44

(51) Int. Cl.⁶ : **H05H 1/22, G21B 1/00**

(21) Application number : **92201661.3**

(22) Date of filing : **09.06.92**

(54) **Method for accomplishing nuclear deuterium-deuterium fusion.**

(30) Priority : **12.06.91 IT MI911622**

(43) Date of publication of application :
**16.12.92 Bulletin 92/51**

(45) Publication of the grant of the patent :
**02.11.95 Bulletin 95/44**

(84) Designated Contracting States :
**AT BE CH DE DK ES FR GB GR IT LI LU MC NL PT SE**

(56) References cited :
**US-A- 4 525 323**
**PHYSICAL REVIEW LETTERS, vol. 63, no. 12, 18 September 1989, New York, US, pp. 1292-1295; BEUHLER et al.: 'Cluster-Impact Fusion'**
**PLASMA PHYSICS, vol. 26, no. 1A, January 1984, Belfast, GB, pp. 237-247; R. BOCK: 'Status and perspectives of heavy ion fusion'**

(56) References cited :
**NUCLEAR INSTRUMENTS & METHODS IN PHYSICS RESEARCH, vol. A278, no. 1, 15 May 1989, Amsterdam, NL, pp. 82-84; JACOBY et al.: 'RFQ-Experiments with intense heavy-ion beams'**
**WORLD PATENTS INDEX LATEST Section Ch, Week 8532, Derwent Publications Ltd., London, GB; Class C, AN 85-192565 & JP-A-60 118 601**

(73) Proprietor : **ENICHEM S.p.A.**
**Piazza Repubblica, 16**
**I-20124 Milano (IT)**

(72) Inventor : **Cerofolini, Gianfranco**
**Via Giambellino 57**
**I-20146 Milan (IT)**

(74) Representative : **Fusina, Gerolamo et al**
**Ing. Barzanò & Zanardo Milano S.p.A,**
**Via Borgonuovo, 10**
**I-20121 Milano (IT)**

## Description

The present invention relates to a method for accomplishing nuclear deuterium-deuterium fusion by means of the bombardment of a target substantially constituted by a light deuterated compound.

Such a method is known from Phys. Rev. Lett., 63, 12, 1292-5 (1989) which will be discussed later.

It is well-known that, in order to reach extremely high temperatures, from those temperatures which are required in order to generate extremely unfavourable matter phases to the theshold temperature values as necessary to cause the nuclear fusion of matter to occur, a high-temperature, high-pressure state of matter has to be obtained for long enough time periods.

In particular for this purpose, if one takes into consideration a target composed by a mixture containing deuterium and tritium, the energy capable of initiating the nuclear fusion of the matter is of the order of tens of kiloelectron-volts; at the temperature obtained in that way, the matter is in the state of strongly ionized plasma and the required time in order to ignite the nuclear fusion process is inversely proportional to the density of said plasma. In order to reach the required temperature values, it is necessary to bombard a target with particle beams of high enough power.

However, it is well-known as well that, although the nuclear fusion reactions take place everywhere throughout universe, and can also be easily studied in the laboratory, a production of power at industrially interesting levels, which exploits the phenomenon of nuclear fusion of light elements has not been accomplished yet owing to the difficulties met, in particular due to the need for using projectiles with an extremely high energy, and very heavy. Both these factors have a negative influence on the practical feasibility of the process or, even if a possibility of accomplishing it exists, on the cheapness thereof.

For example, from Italian patent No. 1,206,783 and G.F. Cerofolini, L. Meda and C. Velpones, Mater. Res. Soc. Synp. Proc. 128, 181 - 1989, it is known that an exceptional state of the matter -- even close to nuclear fusion -- can be achieved with deuterium containing targets, provided that projectiles are used, the mass of which is much higher than 1000 amu, and with an energy of some gigaelectron-volts.

However, also attempting at accomplishing nuclear deuterium-deuterium fusion with projectiles with an acceleration energy of round 300 keV is possible, with such projectiles being selected from heavy clusters, and being caused to collide onto a target constituted by TiD [R.J. Beuhler, G. Friedlander, L. Friedman, Phys. Rev. Lett., 63, 12, 1292-1295 (1989)].

However, the use of such clusters requires that a complex operating system is used, which comprises a grounded source, an acceleration column and a high-voltage target, which system makes it difficult the phenomenon to be measured and interpreted and, consequently, renders problematic a future application of the above method at the industrial level. Furthermore, the nuclear fusion events are always accompanied by side phenomena, which outweigh or render undefinable the same nuclear fusion event.

The present Applicant has found now that nuclear deuterium-deuterium fusion can be accomplished by means of a method using an operating system which comprises a high-voltage source, an acceleration column and a grounded target. Such an operating system is substantially based on the use of particular projectiles and targets, makes it possible the phenomenon to be interpreted more easily and, thanks to the simplicity of the source, undoubtedly facilitates the possible future use of the method at the industrial level.

The method according to the present invention can also be accomplished at lower acceleration voltages than as provided by the prior art and makes it possible a series of events to occur, which are comparable to, and probably greater than, the known events, and which are anyway free from uncontrollable co-phenomena.

In fact, the subject-matter of the present invention according to claim 1 is a method for accomplishing, in an advantageous way, nuclear deuterium-deuterium fusion, which method consists in bombarding a target, preferably at ground voltage, which is constituted by a light deuterated compound, with heavy molecular ions obtained by fragmenting a metal-carbonyl. The mass of such molecular ions is comprised within the range of from 400 to 2000 amu, and the nuclear fusion phenomenon can already be observed at acceleration voltages of round 140 keV.

Metal-carbonyls which can be used are the transition metal carbonyls; among all of them, the use of $Re_2(CO)_{10}$ and $Os_3(CO)_{12}$ is particularly recommended.

The fragmentation of said carbonyls in order to generate the heavy molecular ions, as well as the acceleration of the latter, are accomplished according to techniques which are well-known to those skilled in the art.

According to a preferred form of practical embodiment, the source of molecular ions is kept at a temperature of round 80°C, for a time of approximately $10^4$ seconds: in the case of use of rhenium-carbonyl, the fragmentation takes place, with fragments of the following types being generated:

$$Re_2(CO)_{10} \rightarrow Re_2(CO)^+_x + (10-x)CO + e - (x \geqq 1)$$

At an acceleration voltage of 140 keV, the heavier ions display a ratio of mass:charge approximately of 440 amu.

The projectiles obtained in that way, and accelerated, are sent to collide against the target which, as said, substantially is a light deuterated compound, and preferably is constituted by LiD.

It is well-known that nuclear deuterium-deuterium fusion takes place through two main processes:

$$D + D \rightarrow {}^3He + n \ (3,26 \ meV)$$
$$D + D \rightarrow {}^3H + p \ (4,03 \ meV)$$

Among the resulting products, ${}^3He$ and ${}^3H$ are not detected in our system, because they are absorbed by a dead layer installed before the detector, whilst the neutrons are not detected, because they are electrically neutral; therefore, the nuclear fusion event is confirmed by the detection of the presence of protonic energy.

Then, going back to the preferred form of practical embodiment mentioned hereinabove, according to which fragments deriving from rhenium-carbonyl accelerated at 140 keV are used, and are caused to collide with a target constituted by LiD obtained by grinding LiD crystals and compressing the resulting powder on a stainless-steel support, the detection of the events has been carried out by using a detector of ORTEC BA 019-300-300 type (surface-barrier diode) coated with a Mylar (trade mark) sheet having a thickness of 6 micrometres and preliminarily calibrated with alpha particles and with protons deriving from the impact of deuterium onto a target constituted by TiD.

The energy pattern which derives from the nuclear fusion process according to the present invention was hence expected to be characterized by a peak centred on the value of protonic energy of $\varepsilon = 3.0$ MeV, with the nuclear fusion events ranging between 2.8 and 3.2 MeV.

The results from the experiment carried out by the present Applicant by means of that particular target which is defined hereinabove as the preferred form of practical embodiment, correspond to $10^{-11}$ nuclear fusion events per projectile molecule within the above said range of energy values.

## Claims

1. Method for accomplishing nuclear deuterium-deuterium fusion, which method consists in bombarding a target constituted by a light deuterated compound, characterized in that for the bombardment heavy molecular ions are used which are obtained by fragmenting a metal-carbonyl.

2. Method for accomplishing nuclear deuterium-deuterium fusion according to the preceding claim, characterized in that said method can be carried out by means of an operating system comprising a high-voltage source, an acceleration column and a grounded target.

3. Method for accomplishing nuclear deuterium-deuterium fusion according to one of the preceding claims, in which the light deuterated compound is LiD.

4. Method for accomplishing nuclear deuterium-deuterium fusion according to one of the preceding claims, in which the metal-carbonyl, which is the source of the heavy molecular ions, is selected from among $Re_2(CO)_{10}$ and $Os_3(CO)_{12}$.

5. Method for accomplishing nuclear deuterium-deuterium fusion according to one of the preceding claims, in which the molecular ions used as projectiles have a mass comprised within the range of from 400 to 2000 amu.

6. Method for accomplishing nuclear deuterium-deuterium fusion according to one of the preceding claims, in which the acceleration takes place at voltage values starting from 140 keV.

## Patentansprüche

1. Verfahren zum Ausführen einer Deuterium-Deuterium-Kernfusion, wobei das Verfahren darin besteht, ein Target, welches aus einer leichten deuterierten Verbindung gebildet ist, zu beschießen, dadurch gekennzeichnet, daß für den Beschuß schwere molekulare Ionen verwendet werden, welche durch Fragmentierung eines Metallcarbonyls erhalten wurden.

2. Verfahren zum Ausführen einer Deuterium-Deuterium-Kernfusion gemäß dem voranstehenden Anspruch, dadurch gekennzeichnet daß das Verfahren mittels einer Betriebsvorrichtung durchgeführt werden kann, welche eine Hochspannung, eine Beschleunigungsröhre und ein geerdetes Target umfaßt.

3. Verfahren zum Ausführen einer Deuterium-Deuterium-Kernfusion nach einem der voranstehenden Ansprüche, bei welchem die leichte deuterierte Verbindung LiD ist.

4. Verfahren zum Ausführen einer Deuterium-Deuterium-Kernfusion nach einem der voranstehenden Ansprüche, bei welchem das Metall-Carbonyl, welches die Quelle der schweren molekularen Ionen ist, ausgewählt ist unter $Re_2(CO)_{10}$ und $Os_3(CO)_{12}$.

5. Verfahren zum Ausführen einer Deuterium-Deuterium-Kernfusion nach einem der voranstehenden Ansprüche, bei welchem die molekularen Ionen, die als Projektile verwendet werden, eine Masse im Bereich von 400 bis 2000 atomaren Einheiten aufweisen.

6. Verfahren zum Ausführen einer Deuterium-Deuterium-Kernfusion nach einem der voranstehenden Ansprüche, bei welchem die Beschleunigung bei Spannungswerten beginnend mit 140 keV stattfindet.

**Revendications**

1. Procédé pour réaliser la fusion nucléaire deutérium-deutérium, lequel procédé comprend le bombardement d'une cible faite d'un composé léger deutéré, caractérisé en ce que l'on utilise pour le bombardement des ions moléculaires lourds qui sont obtenus par fragmentation d'un métal-carbonyle.

2. Procédé pour réaliser la fusion nucléaire deutérium-deutérium selon la précédente revendication, caractérisé en ce que ledit procédé peut être effectué au moyen d'une installation d'exploitation comprenant une source haute tension, une colonne d'accélération et une cible mise à la masse.

3. Procédé pour réaliser la fusion nucléaire deutérium-deutérium selon l'une des précédentes revendications, dans lequel le composé léger deutéré est LiD.

4. Procédé pour réaliser la fusion nucléaire deutérium-deutérium selon l'une des précédentes revendications, dans lequel le métal-carbonyle source des ions moléculaires lourds est choisi entre $Re_2(CO)_{10}$ et $Os_3(CO)_{12}$.

5. Procédé pour réaliser la fusion nucléaire deutérium-deutérium selon l'une des précédentes revendications, dans lequel les ions moléculaires utilisés comme projectiles ont une masse comprise dans la fourchette de 400 à 2000 amu.

6. Procédé pour réaliser la fusion nucléaire deutérium-deutérium selon l'une des précédentes revendications, dans lequel l'accélération à lieu à des valeurs de tension partant de 140 keV.